# EUROPEAN PATENT SPECIFICATION

(11) **EP 3 047 220 B1**
(45) Date of publication and mention of the grant of the patent: **09.08.2017**
(21) Application number: 14789393.7
(22) Date of filing: 19.09.2014
(51) Int. Cl.: F25C 5/18, G01F 23/24

(54) **ICE LEVEL PROBE AND ICE MAKER MACHINE INCORPORATING SUCH PROBE**
EISSTANDSSONDE UND EISZUBEREITUNGSMASCHINE MIT SOLCH EINER SONDE
SONDE DE NIVEAU DE GLACE ET MACHINE À GLACE COMPRENANT CETTE SONDE

(30) Priority: 20.09.2013 IT MI20131554
(43) Date of publication of application: 27.07.2016
(73) Proprietor: Innotec S.r.l., 20097 San Donato Milanese (IT)
(72) Inventor: OLIVIERI, Daniele, I-20098 San Giuliano Milanese (IT)
(74) Representative: Porsia, Attilio
(86) International application number: PCT/IB2014/064666
(87) International publication number: WO 2015/040580

(56) References cited:
- WO-A1-2004/106864
- US-A- 4 037 427
- US-A- 5 131 234
- US-A- 5 729 990
- US-A- 5 908 985
- US-A1- 2006 010 967
- US-B1- 6 351 958

## Description

The present invention relates to an ice level probe for an ice maker machine and to an ice maker machine incorporating such probe.

Ice maker machines have been on the market for some time and come in various models and sizes.

The forms of these machines can vary, but the internal structure is provided with an evaporator of a refrigerating unit, an ice making conduit and an ice-collecting bin.

In particular, the machines in question are designed to produce ice in particles, namely "flakes" or "slivers" in granular, cylinder or cube form.

One of the main problems of these machines concerns the interruption of ice making when the ice-collecting bin is full.

Generally, this type of machine is provided with a probe that detects the level of ice.

This probe is generally positioned inside the bin, in a position predefined by the factory.

The probes used in these machines can be of various technologies: mechanical, optical, ultrasonic, capacitive and thermostatic bulb.

All the probes on the market have various operating problems, including failure to start up or shut down the machine when the container is empty or full, and their sensitivity can also change, causing too little or too much ice to be made.

Mechanical probes have the problem that the calcium deposits formed by the water can prevent them from functioning correctly.

Optical probes have the problem that calcium deposits formed by the water over time obscure the photodiodes and the electronic phototransistors, compromising their operation. Moreover, aging of the photodiodes contributes to a progressive decrease in the sensitivity of the probe, which makes it necessary for the user to perform recalibration.

Ultrasonic probes, besides being relatively expensive, also have the problem that the condensation that forms on the electronic transducer capsules causes a decrease in their sensitivity.

Capacitive probes have the problem of being sensitive to electromagnetic disturbance: if installed near metal parts, their sensitivity changes. These probes also have a higher production cost.

Thermostatic bulb probes have the problem that their sensitivity changes depending on the weather conditions (temperature and humidity). In this case the user is obliged to vary their setting for summer or winter use. Moreover, the reaction time of these probes is long as they have high thermal inertia.

The technical aim of the present invention is to produce an ice level probe for an ice maker machine and an ice maker machine incorporating such probe, which solve the aforesaid problems of the prior art.

Within this technical aim, an object of the invention is to provide an ice level probe for an ice maker machine that is durable, has high operating reliability and low production and technical assistance costs.

This and other objects are achieved according to the invention by an ice level probe for an ice maker machine according to claim 1. Advantageously a system for detecting the ice level in an ice maker machine having such ice level probe, comprises means: to set in the control card a first threshold value of temperature; to set in the control card a second threshold value of temperature lower than the first threshold value; to set a thermal power that can be delivered by the heating means, to activate the heating means for the output of said thermal power whenever the current temperature detected by the sensor is equal to or lower than said threshold value, and to control interruption of the production of ice when the current temperature detected by the sensor is equal to or lower than said second threshold value.

Advantageously, the ice level probe in conformity with the invention has a high operating reliability given that, due to its special construction, it is practically unaffected by variations in weather conditions, electromagnetic disturbance, mechanical wear and calcium deposits.

The following documents are cited as prior art:
D1) US 4 037 427; D2) US 5 729 990; D3) US 5 908 985; D4) US 5 131 234; D5) US 2006/010967; D6) US 6 351 958.

Documents D1) describes an ice level probe for an ice maker according to the preamble of claim 1. D2) describe probe means for detecting the presence of water or ice and consequent obstruction of the outlet of a tray placed at the service of a refrigeration evaporator intended for use in a freezing environment. These probe means comprise in said tray a temperature sensor of resistive type and self-heating through the Joule effect, which have a higher temperature when in contact with the air, and a lower temperature when in contact with the ice or iced water that dissipate the heat more effectively. A threshold value is selected between said higher temperature and said lower temperature, the ambient temperature is detected through said resistive and heated sensor, the ambient temperature is compared with said threshold temperature and means are provided for indicating when the temperature of the sensor is higher or lower than said selected threshold temperature and if necessary to stop or restart operation of the refrigeration machine.

The document D3) describes an ice level probe of resistive type which is also characterized by being heated directly (for example, with the circulation of an electrical current through the Constantan material when not measuring the thermal potential) or indirectly (for example by laminating an isolated heater over the sensing strip to form independent heating and measuring processes) for the heat flow characteristics along the strip. The Document D4) describes, more pertinently, an apparatus for detecting the level of the ice stocked in the bin of an ice maker machine, which provides on the temperature sensor a small Joule effect heater to be able to better distinguish when the sensor is in the presence of cold air or in the presence of ice or iced water. The document D5) describes a probe for detecting humidity in a waste product being composted, or in a soil or in other situations, through measuring the temperature with a resistive type probe associated with Joule effect heating means, connected to an electronic control card. The prior art document D6) describes an optical system for detecting level, for use in a refrigerator that produces ice cubes, where the emitter and the receiver of the ray of light that passes through the top of the ice-collecting bin, which is interrupted by the ice when it fills the bin and when this condition occurs controls shut-down of the ice maker machine, are surrounded by sleeves that are heated externally by small electrical resistors to prevent the formation of condensation and consequent fogging of said emitter and of said receiver.

The invention proposes an ice level probe, of resistive type, heated through the Joule effect, but which also has the advantages of an ice level probe of optoelectronic type, such as that of the document D6) considered above, however without the problems caused by fogging, by calcium deposit and by premature aging of the optoelectronic sensors. The probe according to the invention has, mounted in the intermediate part of a small rectangular printed circuit board, a temperature sensor, of resistive type and on the opposite ends of the same board it has mounted on one side an electrical heating resistance and on the other an LED light emitter (hereinafter simply "LED"), which is supplied through this electrical resistance, at which said board is connected to the electrical wires that connect the probe to an external electronic control card. The board with said components and with a section of said electrical wires is inserted into a composite tubular body, having good thermal conductivity properties, and which is filled with an electrical insulating resin with high thermal conductivity, in which the board with the temperature sensor and with the electrical heating resistance is embedded. At the LED, the embedding resin and at least the distal section of said tubular body are formed by materials that allow, besides good electrical insulation, also good diffusion of the light emitted by the same LED. The LED thus has the dual function of heat sink to improve the efficacy of the heating provided by the heating means and of illuminator of the ice, so as to provide the user with a precious visual indication of the ice in the ice-collecting bin at the desired level reached (to date this characteristic is exclusive to optical level probes). In fact, when the ice touches the probe of the present invention and this illuminates for the heating phase, to distinguish whether the same probe is in the presence of cold air or ice or iced water, the light emitted by the LED is transferred and diffused to the ice cubes present in the bin, which are touching one another, so that the user can see the ice illuminated through the usual dispensing means of the machine or through or from the usual bin (transparent or opaque) of the same ice maker machine. No prior art document describes or suggests a temperature probe of impedance meter and illuminated type, produced in a simple, reliable and advantageous manner, which enables the functions of the same probe to be monitored through the light emitted by the LED. In fact, the LED is supplied through an electrical resistance that also acts as heat sink, so that in the event of faults on this same resistance, the LED does not illuminate and indicates malfunction of the probe, and vice versa.

Further characteristics and advantages of the invention will be more apparent from the description of a preferred but not exclusive embodiment of the ice level probe for an ice maker machine according to the invention, illustrated by way of nonlimiting example in the accompanying drawings, wherein:

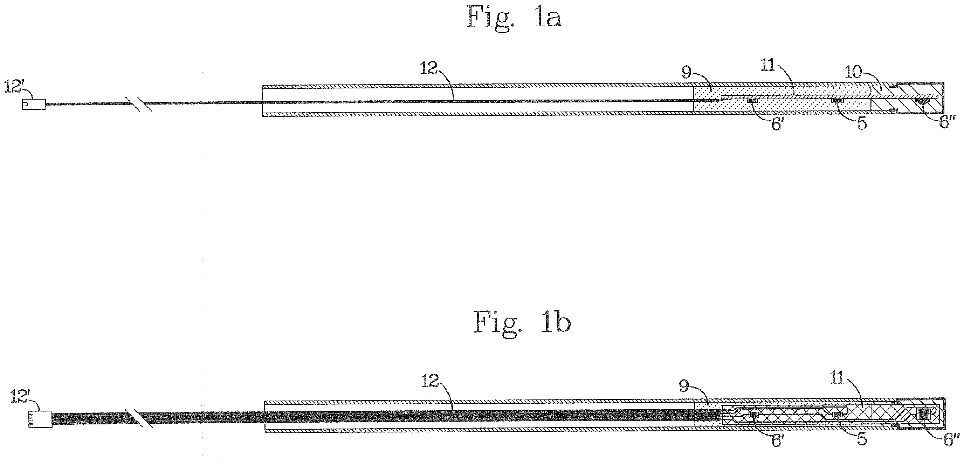

Figs 1 a and 1 b show longitudinal sections made on mutually orthogonal planes of the ice level probe;

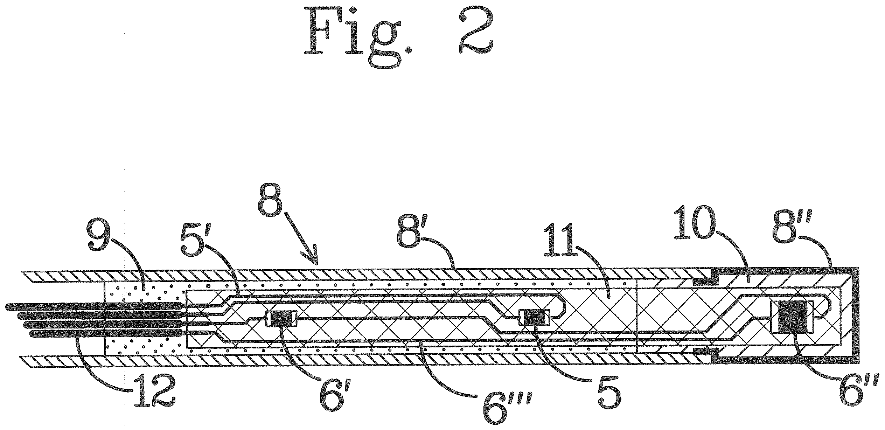

Fig. 2 shows an enlarged detail of the probe of Fig. 1; and
Fig. 3 shows a diagram of the functional blocks that form the probe of Fig. 1.

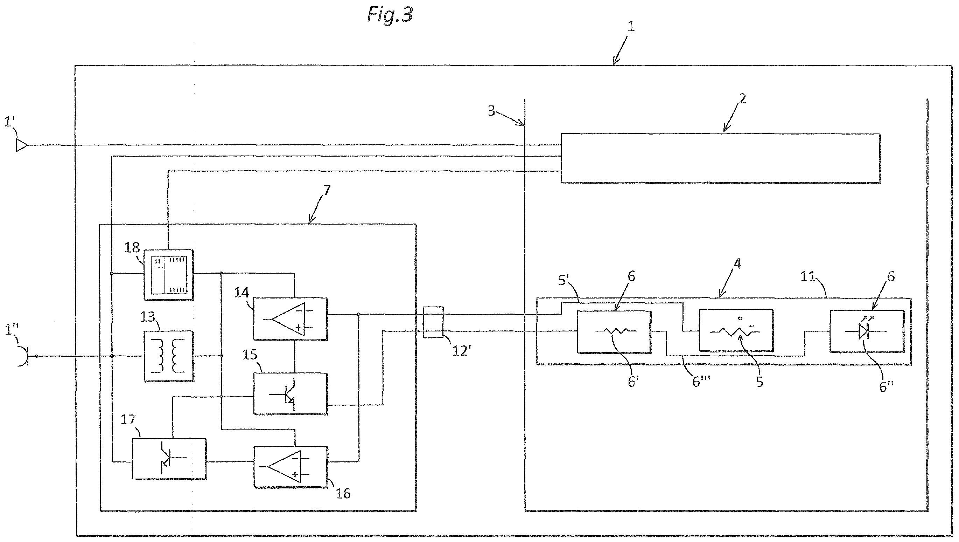

In Fig 3, an ice maker machine, particularly for ice in cubes or in particles, is indicated generically with the reference 1.

The machine 1 comprises a refrigerating unit 2 having an evaporator that produces the ice, and an ice-collecting bin in which there is mounted, through any known connection system, the ice level probe 4 forming the subject matter of the present invention.

The ice level probe 4 comprises at least one temperature sensor 5 and Joule effect heating means 6.

The temperature sensor 5 and the heating means 6 are connected to an electronic control card 7.

The electronic control card 7 can be dedicated and connected in turn to the main electronic control card of the machine 1, or as shown, can be directly the principal electronic control card of the machine 1.

The heating means 6 comprise at least one electrical resistance 6' and preferably, but not necessarily, at least one LED light emitter 6". In other versions of the probe 4 only one of these two components may be provided.

The control card 7 comprises a power supply 13, a first comparator 14, a driver 15 for the LED 6", a second comparator 16, an output 17 and a PLC 18.

From a constructional viewpoint, the ice level probe 4 comprises a tubular casing 8 containing a resin based embedding means with high thermal conductivity, in which the heating means 6 and the temperature sensor 5 are embedded.

To enable the light generated by the LED 6" to diffuse outside the ice level probe 4, the embedding means is transparent at least around the LED diffuser 6" and the tubular casing 8 is made from a material suitable for diffusion of the light.

In particular, the embedding means can consist of a first embedding means 9 in which the resistance 6' and the temperature sensor 5 are embedded, and a second transparent embedding means 10 in which the LED 6" is embedded, while the casing 8 has two distinct parts, a first part 8' that surrounds the resistance 6' and the temperature sensor 5, and a second part 8" that surrounds the LED 6" and has properties suitable for diffusion of the light.

By way of example, the first part 8' of the casing 8 can be made of stainless aluminum, brass, copper or plastic.

The cross section of the tubular casing 8 is preferably round, but can also be flat, square, triangular, etc.

In a preferred embodiment of the heating means 6 the LED 6" is electrically connected in series to the resistance 6', and the electrical circuit 6'" that connects them to the electronic card is separated from the electrical circuit 5' that connects the temperature sensor 5 to the electronic card 7.

In the case illustrated in which the LED 6" has the resistance 6' in series, this latter also acts as power supply current limiter of the LED 6".

Preferably, the heating means 6 and the temperature sensor 5 are installed in a printed circuit 11 on which their electrical circuits 6"', 5' are defined.

From the printed circuit 11 there extends a multipolar cable (12) that, via a connector 12' connects the electrical circuits 6"', 5' to the electronic control card 7.

More precisely, the LED 6" is arranged in a position adjacent to a first longitudinal end of the casing 8 opposite a second longitudinal end thereof from which the multipolar cable 12 protrudes.

The method of detecting the level of ice in the machine 1 is briefly as follows.

The user sets in the memory of the control card 7 a first threshold value of temperature, a second threshold value of temperature lower than the first threshold value, and a thermal power that can be delivered by the heating means.

The electronic card 7 generates a signal to activate the heating means 6 when the current temperature detected by the sensor 5 is equal to or lower than the first threshold value, and generates a control signal to interrupt the production of ice when the current temperature detected by the sensor 5 is equal to or lower than the second threshold value.

In a practical case, the first threshold value can, for example, be set at 2°C and the second threshold value at 1°C. When no ice is present in the collecting bin 3 the sensor 5 is exposed to the ambient air, the temperature of which is greater than 2°C (with relative humidity between 10% and 99%). In this situation, the current temperature detected by the sensor 5 remains above the first threshold level and this information is sent to from the sensor 5 to the electronic card 7.

While the temperature detected is above the first threshold level the heating means 6 are deactivated and the refrigeration unit is active to produce ice.

When the ambient air cools or the ice-collecting bucket 3 fills until reaching the probe 4 and this latter is directly exposed to the solid or melting ice, the current temperature detected by the sensor drops until reaching and even passing beyond the first threshold level.

When the temperature detected by the sensor 5 and transmitted to the electronic card 7 reaches the first threshold value, the electronic card 7 processes this information through the first comparator 14, generating a signal to activate the heating means 6 that through the Joule effect produce thermal energy that tends to cause the temperature of the probe 4 to rise.

The heating means 6 remain active until the temperature detected rises above the first threshold level.

Therefore, there can be two conditions in which the probe 4 detects a low temperature, one determined by the presence of cold air and other by the presence of ice.

To correctly distinguish between the presence of ice with respect to cold ambient air, the thermal power that can be delivered by the heating means 6 is specifically calibrated, and the fact that the thermal capacity of ice is considerably higher than that of air is exploited.

The thermal power of the heating means 6 is in fact calibrated to be sufficient to maintain the probe 4 in thermal equilibrium in free air but insufficient to maintain the probe in thermal equilibrium with solid or melting ice: when the heating means 6 are active, only the presence of solid or melting ice is therefore capable of determining the drop in the temperature of the probe 4 until reaching and even passing beyond the second threshold level.

When the dropping temperature detected by the sensor 5 and transmitted to the electronic card 7 reaches the second threshold value, the electronic card 7 processes this information through the second comparator 16 generating a signal to interrupt the production of ice.

It must be remarked that the LED 6" advantageously has a dual function: it acts as heat sink but also as illuminator of the ice that thus provides the user with a precious visual indication of the presence of ice in the bin 3 at the desired level reached.

The probe in conformity with the invention has numerous other advantages: it does not require recalibration as it is not exposed to the risk of changes to its sensitivity over time; it has very fast reaction times, especially if compared with a conventional thermostatic bulb probe; it can be applied in replacement of a preexisting probe without the need to change the main electronic control card of the machine; it has a very simple and inexpensive structure.

The performances of the probe can be optimized through suitable programming of the drive of the heating means 6 as a function of the ambient temperature: in this way the response speed at low ambient temperature is facilitated and excessive melting of the ice at high temperatures is prevented.

Moreover, the LED 6" and the electrical resistance 6' can be driven separately and independently, in the version of the probe in which both components are provided, to drive the LED 6" only when the temperature sensor 5 detects the ice.

The ice level probe for ice maker and distributing machines thus conceived is susceptible to numerous modifications and variations, all falling within the scope of the inventive concept as in the appended claims. In practice, according to needs and to the state of the art, any type of material or dimensions can be used.

## Claims

1. Ice level probe (4) for an ice maker machine comprising an evaporator of a refrigerating unit and an ice-collecting bin (3) and in which said ice level probe (4) is positioned, comprising at least one temperature sensor (5) connected to an electronic control card (7) that comprises Joule effect heating means (6) connected to said electronic control card (7), wherein said heating means (6) comprise at least one electrical resistance (6'), the thermal power that can be delivered by the heating means (6) being calibrated so as to be sufficient to maintain the probe (4) in thermal equilibrium in free air but insufficient to maintain the probe in thermal equilibrium with solid or melting ice,
**characterized in that**
said heating means (6) comprise at least one LED (6") and characterized also by the fact of comprising a tubular casing (8) containing a resin based embedding means (9, 10) with high thermal conductivity, in which said heating means (6) and said temperature sensor (5) are embedded, said embedding means (10) being transparent at least around said LED (6') and said tubular casing (8) being made from a material suitable for diffusion of the light generated by said at least one LED (6") that advantageously performs the dual function of heat sink and illuminator of the ice, so as to provide the user with a precious visual indication of the presence of ice in the bin (3) at the desired level reached.

2. Ice level probe (4) according to the preceding claim, **characterized in that** the electrical circuit that connects said temperature sensor (5) to the electronic card (7) is separated from the electrical circuit that connects the heating means (6) to the electronic card (7).

3. Ice level probe (4) according to any one of the preceding claims, **characterized in that** said heating means (6) and said sensor (5) are installed in a printed circuit (11) from which there extends a multipolar cable (12) connecting their electrical circuit to the electronic control card (7).

4. Ice level probe (4) according to claim 3, **characterized in that** said at least one LED (6") is in a position adjacent to a first longitudinal end of said casing (8) opposite a second longitudinal end from which said multipolar cable (12) protrudes.

5. An ice maker machine comprising the ice level probe (4) according to any one of the preceding claims, **characterized in that** it comprises:
- means to set in the control card (7) a first threshold value of temperature;
- means to set in the control card (7) a second threshold value of temperature lower than the first threshold value;
- means to set a thermal power that can be delivered by the heating means (6);
- means to activate the heating means (6) for the output of said thermal power whenever the temperature detected by the sensor (5) is equal to or lower than said first threshold value; and
- means to control interruption of the production of ice when the current temperature detected by the sensor (5) is equal to or lower than said second threshold value.

## Patentansprüche

1. Eine Eisstandssonde (4) für eine Eiszubereitungsmaschine, welche einen Verdampfer einer Kühleinheit und einen Eissammelbehälter (3) umfasst und in der die genannte Eisstandssonde (4) angeordnet ist, die mindestens einen Temperatursensor (5) umfasst, der an eine elektronische Steuerkarte (7) angeschlossen ist, welche entsprechende Joule-Effekt-Heizelemente (6) umfasst, die mit der genannten elektronischen Steuerkarte (7) verbunden sind, wobei die genannten Heizelemente (6) jeweils mindestens einen elektrischen Widerstand (6") umfassen, und die Heizkraft, welche durch die Heizelemente (6) geliefert werden kann, so geeicht ist, dass sie ausreicht, um die Sonde (4) in freier Luft im Wärmeausgleich zu halten, nicht aber ausreicht, um die Sonde bei festem oder schmelzendem Eis im Wärmeausgleich zu halten,
**dadurch gekennzeichnet, dass**
die genannten Heizelemente (6) mindestens eine LED (6") umfassen und ebenfalls durch die Tatsache gekennzeichnet, dass sie ein röhrenförmiges Gehäuse (8) umfasst, das ein Einbettungselement (9, 10) auf Harzbasis mit hoher Wärmeleitfähigkeit enthält, in das die genannten Heizelemente (6) und der genannte Temperatursensor (5) jeweils eingebettet sind, wobei das genannte Einbettungselement (10) transparent ist, und zwar mindestens rund um die genannte LED (6'), und das genannte röhrenförmige Gehäuse (8) aus entsprechend geeignetem Material für die Diffusion des Lichts besteht, das durch die genannte mindestens eine LED (6") erzeugt wird, welche vorteilhafterweise die doppelte Funktion eines Kühlkörpers und eines Beleuchters des Eises erfüllt, so dass dem Anwender eine wertvolle visuelle Anzeige des Vorhandenseins von Eis im Behälter (3) bei Erreichung des gewünschten Stands zur Verfügung gestellt wird.

2. Eine Eisstandssonde (4) gemäß dem vorausgegangenen Anspruch, **dadurch gekennzeichnet, dass** der Stromkreis, welcher den genannten Temperatursensor (5) mit der elektronischen Karte (7) verbindet, jeweils von dem Stromkreis getrennt ist, der die Heizelemente (6) mit der elektronischen Karte (7) verbindet.

3. Eine Eisstandssonde (4) gemäß einem beliebigen der vorausgegangenen Ansprüche, **dadurch gekennzeichnet, dass** die genannten Heizelemente (6) und der genannte Sensor (5) jeweils in einer Platine (11) installiert sind, von der aus sich ein mehrpoliges Kabel (12) erstreckt, welches deren Stromkreis jeweils mit der elektronischen Steuerkarte (7) verbindet.

4. Eine Eisstandssonde (4) gemäß Anspruch 3, **dadurch gekennzeichnet, dass** die genannte mindestens eine LED (6") sich in einer Stellung befindet, welche an ein erstes Längsende des genannten Gehäuses (8) grenzt, und zwar gegenüber von einem zweiten Längsende, von dem aus sich das genannte mehrpolige Kabel (12) erstreckt.

5. Eine Eiszubereitungsmaschine, welche die Eisstandsonde (4) umfasst, gemäß einem beliebigen der vorausgegangenen Ansprüche, **dadurch gekennzeichnet, dass** sie folgendes umfasst:
- Elemente, in die der Steuerkarte (7) einen ersten Temperaturschwellenwert einzustellen;
- Elemente, um in der Steuerkarte (7) einen zweiten Temperaturschwellenwert einzustellen, der niedriger als der erste Schwellenwert ist;
- Elemente, um eine Heizkraft einzustellen, welche durch die Heizelemente (6) geliefert werden kann;
- Elemente, um die Heizelemente (6) für die Abgabe der genannten Heizkraft einzuschalten, und zwar jedes Mal dann, wenn die durch den Sensor (5) festgestellte Temperatur dem genannten ersten Schwellenwert entspricht beziehungsweise niedriger ist; und
- Elemente, um die Unterbrechung der Eisherstellung zu kontrollieren, wenn die momentane, durch den Sensor (5) festgestellte Temperatur dem genannten zweiten Schwellenwert entspricht beziehungsweise niedriger ist.

## Revendications

1. Sonde de niveau de glace (4) pour une machine à glaçons comprenant un évaporateur d'une unité de réfrigération et un bac collecteur de glaçons (3) et dans lequel ladite sonde de niveau de glace (4) est positionnée, comprenant au moins un capteur de température (5) connecté à une carte de commande électronique (7) qui comprend des moyens de chauffage par effet Joule (6) connectés à ladite carte de commande électronique (7), dans laquelle lesdits moyens de chauffage (6) comprennent au moins une résistance électrique (6'), la puissance thermique qui peut être délivrée par les moyens de chauffage (6) étant étalonnée de manière à être suffisante pour maintenir la sonde (4) en équilibre thermique à l'air libre mais insuffisante pour maintenir la sonde en équilibre thermique avec de la glace solide ou fondante,
**caractérisée en ce que**
lesdits moyens de chauffage (6) comprennent au moins une LED (6") et **caractérisée** également **en ce qu'**elle comprend une enveloppe tubulaire (8) contenant des moyens d'inclusion à base de résine (9, 10) avec une haute conductivité thermique, dans lesquelles lesdits moyens de chauffage (6) et ledit capteur de température (5) sont noyés, lesdits moyens d'inclusion (10) étant transparents au moins autour de ladite LED (6') et ladite enveloppe tubulaire (8) étant constituée d'un matériau adapté pour la diffusion de la lumière générée par ladite au moins une LED (6") qui remplit avantageusement la double fonction de dissipateur thermique et d'illuminateur de la glace, de manière à fournir à l'utilisateur une précieuse indication visuelle de la présence de glace dans le bac (3) au niveau désiré atteint.

2. Sonde de niveau de glace (4) selon la revendication précédente, **caractérisée en ce que** le circuit électrique qui connecte ledit capteur de température (5) à la carte de commande électronique (7) est séparé du circuit électrique qui connecte les moyens de chauffage (6) à la carte de commande électronique (7).

3. Sonde de niveau de glace (4) selon l'une quelconque des revendications précédentes, **caractérisée en ce que** lesdits moyens de chauffage (6) et ledit capteur (5) sont installés dans un circuit imprimé (11) à partir duquel s'étend un câble multipolaire (12) connectant leur circuit électrique à la carte de commande électronique (7).

4. Sonde de niveau de glace (4) selon la revendication 3, **caractérisée en ce que** ladite au moins une LED (6") est dans une position adjacente à une première extrémité longitudinale de ladite enveloppe (8) opposée à une deuxième extrémité longitudinale à partir de laquelle ledit câble multipolaire (12) fait saillie.

5. Machine à glaçons comprenant la sonde de niveau de glace (4) selon l'une quelconque des revendications précédentes, **caractérisée en ce qu'**elle comprend :
- des moyens pour régler dans la carte de commande (7) une première valeur de seuil de température ;
- des moyens pour régler dans la carte de commande (7) une deuxième valeur de seuil de température inférieure à la première valeur de seuil ;
- des moyens pour régler une puissance thermique qui peut être délivrée par les moyens de chauffage (6) ;
- des moyens pour activer les moyens de chauffage (6) pour la fourniture en sortie de ladite puissance thermique chaque fois que la température détectée par le capteur (5) est égale ou inférieure à ladite première valeur de seuil ; et
- des moyens pour commander l'interruption de la production de glace quand la température actuelle détectée par le capteur (5) est égale ou inférieure à ladite deuxième valeur de seuil.
